# EUROPÄISCHE PATENTSCHRIFT

(11) **EP 4 516 193 B1**
(45) Veröffentlichungstag und Bekanntmachung des Hinweises auf die Patenterteilung: **01.07.2026**
(21) Anmeldenummer: 24193999.0
(22) Anmeldetag: 11.08.2024
(51) Int. Cl.: A47L 11/40, B25J 11/00, B25J 5/00

(54) **REINIGUNGSROBOTER MIT EINEM ROBOTERARM SOWIE VERFAHREN ZUR STEUERUNG DES REINIGUNGSROBOTERS**
ROBOT CLEANER HAVING A ROBOT ARM AND METHOD FOR CONTROLLING THE ROBOT CLEANER
ROBOT DE NETTOYAGE DOTÉ D'UN BRAS ROBOTISÉ ET PROCÉDÉ DE COMMANDE DU ROBOT DE NETTOYAGE

(30) Priorität: 31.08.2023 DE 102023208401
(43) Veröffentlichungstag der Anmeldung: 05.03.2025
(73) Patentinhaber: BSH Hausgeräte GmbH, 81739 München (DE)
(72) Erfinder: Schnitzer, Frank, 97616 Bad Neustadt (DE); Daniel, Kristina, 97616 Bad Neustadt (DE)

(56) Entgegenhaltungen:
- EP-A1- 3 679 847
- WO-A1-2021/142984
- CN-U- 219 021 001
- DE-A1- 102017 112 740

## Beschreibung

Die Erfindung betrifft einen Reinigungsroboter zur Reinigung eines Reinigungsbereichs mit den Merkmalen des Oberbegriffs des Anspruchs 1. Ferner betrifft die Erfindung ein Verfahren zur Steuerung des Reinigungsroboters.

Es sind selbsttätig fortbewegende Reinigungsroboter bekannt, welche zur Reinigung, insbesondere zum Saugen und/oder Wischen, eines ebenen Bodenbelags dienen. Während derzeitige Robotermodelle nur mehr oder weniger den ebenen Bodenbelag reinigen können, sollen zukünftige Reinigungsroboter auch herumliegende Gegenstände weg- oder aufräumen können. Hierzu sind Reinigungsroboter bekannt, welche mit einem Manipulator ausgestattet sind, mit dessen Hilfe der Reinigungsroboter unter anderem Gegenstände greifen kann.

Die Druckschrift WO 2021 142 984 A1 offenbart einen mobilen Roboter, welcher einen Roboterkörper und einen Roboterarm umfasst. Ein Ende des Roboterarms ist mit dem Roboterkörper verbunden und das andere Ende ist als ein Klemmteil ausgebildet, wobei das Klemmteil zum Greifen eines Objekts verwendet wird. Der Roboterkörper ist mit einer Aussparung zur Aufnahme des Roboterarms versehen, wobei der Roboterarm in der Aussparung gekrümmt oder gefaltet angeordnet ist.

Der Erfindung liegt die Aufgabe zugrunde, einen Reinigungsroboter mit einem Roboterarm zu schaffen, welcher sich durch eine kompakte und kostengünstige Ausgestaltung auszeichnet.

Die Aufgabe wird durch einen Reinigungsroboter nach Patentanspruch 1 sowie ein Verfahren nach Patentanspruch 14 gelöst. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Gegenstand der Erfindung ist ein Reinigungsroboter, welcher zur Reinigung eines Reinigungsbereichs ausgebildet und/oder geeignet ist. Ein Reinigungsroboter ist ein Reinigungsgerät, das in der Lage ist, sich selbsttätig bzw. autonom in einem Reinigungsbereich zu bewegen, um ein oder mehrere zu reinigende Flächen in dem Reinigungsbereich ganz oder teilweise zu reinigen. Insbesondere ist unter einem Reinigungsbereich ein in einem Gebäude abgegrenzter und/oder abgeschlossener Bereich, vorzugsweise ein oder mehrere miteinander verbundene Räume zu verstehen.

Der Reinigungsroboter weist ein Gehäuse, eine Antriebseinheit und eine Bodenreinigungseinheit auf. Unter dem Gehäuse ist insbesondere das äußere Gehäuse des Reinigungsroboters zu verstehen, welches den Reinigungsroboter nach außen hin abschließt. Im Inneren des Gehäuses befindet sich also das Innenleben des Reinigungsroboters. Anders formuliert, sind zumindest die Antriebseinheit und die Bodenreinigungseinheit in dem Gehäuse aufgenommen bzw. angeordnet.

Die Antriebseinheit dient zum Antrieb des Reinigungsroboters in dem Reinigungsbereich. Hierzu kann die Antriebseinheit als ein Rad- oder Raupenantrieb ausgebildet sein. Die Antriebseinheit weist vorzugsweise ein Fahrwerk mit mindestens oder genau einem Antriebsmittel auf, welches vorzugsweise über einen elektrischen Antriebsmotor zur Fortbewegung des Reinigungsroboters angetrieben wird bzw. antreibbar ist. Anders formuliert, greift das Antriebsmittel unmittelbar an dem zu reinigenden Untergrund, vorzugsweise einer Bodenfläche, des Reinigungsbereichs an, um den Reinigungsroboter zu bewegen. Das Antriebsmittel kann zur Bildung des Radtriebes als ein Rad, eine Rolle oder ein Ball ausgebildet sein. Alternativ kann das Antriebsmittel zur Bildung des Raupenantriebs als eine Kette oder ein Band ausgebildet sein. Optional ergänzend können ein oder mehrere antriebslose Stützräder vorgesehen sein.

Die Bodenreinigungseinheit dient zur Reinigung der Bodenfläche des Reinigungsbereichs. Hierzu kann die Bodenreinigungseinheit einen Staubsauger, beispielsweise einen Nasssauger und/oder einen Trockensauger, umfassen. Alternativ oder optional ergänzend kann die Bodenreinigungseinheit eine oder mehrere feststehende oder angetriebene Bürsten, Walzen, Wischer, Tücher oder dergleichen umfassen. Im Speziellen weist das Gehäuse einen Saugkanal und einen an den Saugkanal anschließenden Saugmund auf, welcher an einer Unterseite des Gehäuses der zu reinigenden Bodenfläche zugewandt ist. Vorzugsweise ist der Saugmund mit der Bodenreinigungseinheit, vorzugsweise dem Staubsauger, verbunden, um Luft durch den Saugkanal und den Saugmund zu saugen.

Der Reinigungsroboter weist einen Roboterarm auf, welcher zum Bewegen von Objekten und/oder zur Reinigung einer gegenüber der Bodenfläche erhöhten Oberfläche ausgebildet und/oder geeignet ist, wobei der Roboterarm in einer Ruhestellung an einer Gehäusefront des Gehäuses angeordnet ist. Insbesondere ist unter einem Roboterarm ein ein- oder mehrgelenkiger Manipulator zu verstehen, welcher an seinem freien Ende einen Endeffektor, vorzugsweise einen Greifer, aufweist. Der Roboterarm ist vorzugsweise über ein Basisgelenk um eine Drehachse drehbar und über ein Kippgelenk um eine Kippachse kippbar an dem Gehäuse angeordnet. Vorzugsweise sind die Drehachse und die Kippachse rechtwinklig zueinander angeordnet. Alternativ oder optional ergänzend ist die Drehachse zu einer Gehäusehochachse gleichgerichtet und/oder die Kippachse, zumindest in einer Grundstellung, zu einer Gehäuselängsachse und/oder einer Radialebene der Gehäusehochachse gleichgerichtet. Beispielsweise kann der Roboterarm in der Ruhestellung an der Gehäusefront verstaut, vorzugsweise gekrümmt und/oder gefaltet, angeordnet sein. Der Roboterarm kann aus der Ruhestellung in mindestens oder genau eine Arbeitsstellung überführt werden. In der Arbeitsstellung kann der Roboterarm in dem Reinigungsbereich angeordnete Objekte manipulieren, vorzugsweise greifen und/oder bewegen. Alternativ oder optional ergänzend kann der Roboterarm in der Arbeitsstellung ein Werkzeug für eine Reinigung der erhöhten Oberfläche, z. B. ein Möbelstück, greifen und/oder benutzen.

Weiterhin weist der Reinigungsroboter eine Steuereinheit auf, welche zur Steuerung der Antriebseinheit, der Bodenreinigungseinheit und des Roboterarms ausgebildet und/oder geeignet ist. Insbesondere ist die Steuereinheit dazu eingerichtet, eine Navigation und/oder Steuerung des Reinigungsroboters in dem Reinigungsbereich auf Basis von Umfeld- und Sensordaten durchzuführen. Die Steuereinheit kann die Antriebseinheit und die Bodenreinigungseinheit steuern, um den Reinigungsroboter systematisch über die Bodenfläche zu führen und die Bodenfläche zu reinigen. Die Steuereinheit kann weiter den Roboterarm steuern, um im Fahrweg des Roboters angeordnete Objekte zu manipulieren, also zum Beispiel aufzuräumen oder zumindest zur Seite zu räumen, um Platz für eine Bodenreinigung zu schaffen, und/oder die erhöhte Oberfläche, insbesondere mittels des Werkzeuges, zu reinigen. Bevorzugt ist die Steuereinheit in dem Gehäuse aufgenommen bzw. angeordnet und signaltechnisch mit der Antriebseinheit, der Bodenreinigungseinheit und dem Roboterarm verbunden.

Im Rahmen der Erfindung wird vorgeschlagen, dass der Roboterarm in der Ruhestellung einen Stoßfänger, auch als Bumper bezeichnet, bildet. Insbesondere dient der Stoßfänger dazu eine Kollision mit einem Hindernis abzufangen und/oder zu detektieren. In der einfachsten Ausführung bildet der Roboterarm einen Rammschutz, der als mechanischer Puffer ausgelegt ist, um eine Kollision zwischen dem Reinigungsroboter und dem Hindernis abzufangen und/oder zu dämpfen. Vorzugsweise ist der Roboterarm in der Ruhestellung derart an dem Gehäuse angeordnet, dass dieser keine Störkontur, insbesondere in der Höhe des Reinigungsroboters, bildet. Vorzugsweise erstreckt sich der Roboterarm in der Ruhestellung größtenteils über die gesamte Gehäusefront. Die Gehäusefront ist dabei als der Teil des Gehäuses zu verstehen, welcher bei einer Geradeausfahrt prinzipiell mit einem Hindernis in Kontakt treten kann. Anders formuliert, tritt der Reinigungsroboter bei einer Kollision mit einem Hindernis ausschließlich mit dem Roboterarm mit dem Hindernis in Kontakt. Beispielsweise kann die Gehäusefront eine runde oder eckige Außenkontur aufweisen, wobei der Roboterarm in der Ruhestellung zumindest annähernd der Außenkontur der Gehäusefront folgt. Im Speziellen ist der Roboterarm in der Ruhestellung relativ zu dem Gehäuse bewegbar gelagert.

Der Erfindung liegt die Erkenntnis zugrunde, dass bei einer Kombination einer fahrenden Plattform und einem Roboterarm der Platzbedarf des Reinigungsroboters - vor allem in der Höhe - schnell anwachsen kann und somit die Gesamthöhe des Reinigungsroboters neu definiert. In der Arbeitsstellung kann der Roboterarm das Gehäuse überragen, wodurch ein Unterfahren von Möbeln oder Gegenständen, wie z. B. Bett, Stühle, etc., eingeschränkt wird und/oder zu einer Beschädigung des Roboterarms führen kann.

Der Vorteil der Erfindung besteht darin, dass der Roboterarm in der Ruhestellung platzsparend am Gehäuse angeordnet werden kann. Dadurch wird die Beweglichkeit des Reinigungsroboters in dem Reinigungsbereich durch den Roboterarm nicht eingeschränkt, so dass der Reinigungsroboter entsprechend seiner Gehäuseabmessungen ungehindert in dem Reinigungsbereich Gegenstände unterfahren kann. Ein weiterer Vorteil besteht darin, dass der Roboterarm in der Ruhestellung als Stoßfänger genutzt werden kann, wodurch auf die Anordnung eines zusätzlichen Stoßfängers bzw. Bumpers an der Gehäusefront verzichtet werden kann. Es wird somit ein Reinigungsroboter mit einem Roboterarm vorgeschlagen, welcher sich durch eine kompakte und kostengünstige Ausgestaltung auszeichnet.

In einer konkreten Ausgestaltung ist vorgesehen, dass das Gehäuse an der Gehäusefront einen Aufnahmebereich für den Roboterarm aufweist. Insbesondere dient der Aufnahmebereich zur Aufnahme und/oder Abstützung des Roboterarms in der Ruhestellung. Dabei ist der Roboterarm in der Ruhestellung innerhalb einer Maximalhöhe des Reinigungsroboters in dem Aufnahmebereich angeordnet. Vereinfacht gesagt, ist der Roboterarm in Bezug auf eine Gehäusehochachse überstandfrei zu der höchsten Stelle des Reinigungsroboters in dem Aufnahmebereich angeordnet. Vorzugsweise ist die Maximalhöhe des Reinigungsroboters durch das Gehäuse selbst oder einen an dem Gehäuse angeordneten Aufbau, wie z. B. ein Umfeldsensor, definiert. Es wird somit ein Reinigungsroboter vorgeschlagen, dessen maximale Höhe in der Ruhestellung des Roboterarms durch das Gehäuse bzw. einen Aufbau und nicht durch den Roboterarm bestimmt ist.

Alternativ oder optional ergänzend ist vorgesehen, dass der Roboterarm zumindest in Bezug auf die Gehäusehochachse und/oder eine Gehäuselängsachse mit einem Überstand zu dem Gehäuse in dem Aufnahmebereich angeordnet ist. Optional ergänzend ist der Roboterarm in Bezug auf eine Gehäusequerachse mit einem Überstand zu dem Gehäuse in dem Aufnahmebereich angeordnet. Anders formuliert überragt der Roboterarm das Gehäuse nach vorne, nach oben und optional zumindest abschnittsweise zu den beiden Seiten. Beispielsweise kann der Überstand mindestens 1 mm, vorzugsweise mehr als 5 mm, im Speziellen mehr als 10 mm betragen. Im Speziellen sind die Gehäusehochachse, die Gehäuselängsachse und die Gehäusequerachse durch ein Bezugskoordinatensystem definiert, wobei eine z-Achse achsgleich zu der Gehäusehochachse, eine x-Achse achsgleich zu der Gehäuselängsachse, eine y-Achse achsgleich zu der Gehäusequerachse ist. Insbesondere ist eine Fahrtrichtung des Reinigungsroboters bei einer Geradeausfahrt in axialer Richtung bezüglich der Gehäuselängsachse ausgerichtet. Durch den Überstand wird sichergestellt, dass der Roboterarm zuerst mit einem Hindernis in Kontakt tritt, noch bevor das Gehäuse selbst mit dem Hindernis kollidiert.

In einer Weiterbildung ist vorgesehen, dass der Aufnahmebereich einen Anlageabschnitt aufweist, welcher zur Anlage des Roboterarms an dem Gehäuse ausgebildet und/oder geeignet ist. Insbesondere dient der Anlageabschnitt zur horizontalen Anlage bzw. Ablage des Roboterarms in der Ruhestellung. Hierzu ist der Roboterarm zumindest in axialer Richtung in Bezug auf die Gehäusehochachse an dem Anlageabschnitt abgestützt. Der Anlageabschnitt kann als ein in axialer Richtung in Bezug auf die Gehäuselängsachse und/oder in axialer Richtung in Bezug auf die Gehäusequerachse ausgerichteter Rand ausgebildet sein, welcher sich zumindest an der Gehäuseunterseite an der Gehäusefront erstreckt. Im Speziellen erstreckt sich der Anlageabschnitt in einer Radialebene der Gehäusehochachse.

Gemäß dieser Weiterbildung weist der Anlageabschnitt mindestens oder genau eine Gleitfläche auf, über welche der Roboterarm in der Ruhestellung zumindest abschnittsweise gleitend an dem Anlageabschnitt abgestützt ist. Die Gleitfläche hat insbesondere die Funktion eine Reibung zwischen dem Roboterarm und dem Anlageabschnitt bei einer Anlage des Roboterarms in der Ruhestellung zu reduzieren. Die Gleitfläche kann bereichsweise punktuell oder vollflächig an dem Anlageabschnitt angeordnet sein. Beispielsweise kann die Gleitfläche durch ein oder mehrere Teflon-Plättchen gebildet sein. Durch den Anlageabschnitt kann eine Entlastung des Roboterarms in der Ruhestellung sichergestellt werden, sodass insbesondere die Gelenkantriebe des Roboterarms entlastet werden. Durch die gleitende Anlage wird zudem sichergestellt, dass der Roboterarm bereits bei geringen Krafteinwirkungen bei einer Kollision mit einem Hindernis aufgrund der reduzierten Reibkraft relativ zu dem Gehäuse bewegbar ist.

In einer weiteren konkreten Ausführung ist vorgesehen, dass der Roboterarm mindestens oder genau zwei Segmente aufweist, welche über jeweils ein Gelenk zu einer seriellen Kinemathek miteinander verbunden sind. Insbesondere ist der Manipulator durch mindestens ein Segment und der Endeffektor durch mindestens ein Segment gebildet. Die Segmente können hohl ausgestaltet sein und/oder eine ummantelte Stützstruktur aufweisen. Vorzugsweise sind die Gelenke jeweils als ein Schwenkgelenk ausgebildet. Ein erstes Segment kann auf der einen Seite über das Basisgelenk und/oder das Kippgelenk mit dem Gehäuse und auf der anderen Seite über ein erstes Gelenk mit einem zweiten Segment gelenkig verbunden sein. Das zweite Segment kann wiederum über ein zweites Gelenk mit einem dritten Segment, usw. verbunden sein. Anders formuliert, ist das erste Segment als ein Basissegment ausgebildet, das zweite Segment als ein Zwischensegment und das dritte Segment als ein weiteres Zwischensegment oder der Endeffektor ausgebildet. Besonders bevorzugt weist der Roboterarm genau fünf der Segmente auf.

Gemäß dieser Ausführung ist vorgesehen, dass in der Ruhestellung des Roboterarms zumindest ein Segment an einer ersten Seitenfläche der Gehäusefront angeordnet ist und das eine Segment oder ein weiteres Segment an einer Vorderfläche der Gehäusewand angeordnet ist und das eine Segment oder ein weiteres Segment an einer zweiten Seitenfläche der Gehäusefront angeordnet ist. Bei einer runden Außenkontur folgt das mindestens eine Segment, bzw. die einzelnen Segmente zumindest annähernd der Außenkontur des Gehäuses in einem Winkelbereich von mehr als 90° und/oder mindestens oder genau 180°. Bei einer eckigen Kontur folgt das mindestens eine Segment, bzw. die einzelnen Segmente zumindest annähernd der Außenkontur des Gehäuses, indem die Gelenke an den Ecken angeordnet und/oder die Segmente winklig, vorzugsweise rechtwinklig, zueinander angeordnet sind. Alternativ oder optional ergänzend weist das mindestens eine Segment, bzw. die einzelnen Segmente eine ähnliche Kontur und/oder Form wie das Gehäuse auf. Dies bedeutet, dass das Segment bzw. die Segmente entsprechend der Außenkontur des Gehäuses winkelig oder rund geformt sind. Besonders bevorzugt sind die Segmente zu der jeweiligen Seitenfläche bzw. der Vorderfläche gleichgerichtet und/oder parallel und/oder äquidistant angeordnet. Es wird somit ein Roboterarm vorgeschlagen, welcher die Gehäusefront sowohl in Gehäuselängsrichtung als auch in Gehäusequerrichtung in der Ruhestellung zumindest teilweise abdeckt, um dieses bei einer Kollision mit einem Hindernis zu schützen.

In einer weiteren Ausgestaltung ist vorgesehen, dass der Roboterarm eine Berührungssensorik aufweist, welche zur Erfassung einer Kollision mit einem Hindernis in dem Reinigungsbereich ausgebildet und/oder geeignet ist. Die Berührungssensorik kann durch ein oder mehrere Einzelsensoren und/oder Sensorsysteme gebildet sein. Besonders bevorzugt ist die Berührungssensorik als eine flächendeckende Berührungssensorik ausgebildet, welche eingerichtet ist, eine Berührung des Roboterarms mit dem Hindernis an jeder Stelle des Roboterarms, vorzugsweise zumindest in Gehäuselängsrichtung und/oder in Gehäusequerrichtung, zu erfassen.

Die Berührungssensorik ist ausgebildet, bei einer Berührung des Roboterarms in der Ruhestellung mit einem Hindernis ein Sensorsignal bereitzustellen, wobei die Steuereinheit ausgebildet ist, auf Basis des Sensorsignals einen Fahrplan des Reinigungsroboters zu beeinflussen. Insbesondere ist die Steuereinheit ausgebildet auf Basis von Informationen der Berührungssensorik, insbesondere des Sensorsignals, einen Bewegungspfad des Reinigungsroboters über die Bodenfläche zu bestimmen und den Reinigungsroboter entsprechend der geplanten Bewegung zu steuern. Die Steuereinheit kann hierzu die Antriebseinheit auf Basis des Sensorsignals ansteuern, um eine Fahrtrichtung des Reinigungsroboters zu ändern. Optional kann die Berührungssensorik in der Arbeitsstellung des Roboterarms dazu genutzt werden, um eine Kollision des Roboterarms, vorzugsweise des Manipulators und/oder des Endeffektors, mit der Umgebung und/oder mit dem zu manipulierenden Objekt zu detektieren. Es wird somit ein Roboterarm vorgeschlagen, welcher neben der Funktion als Stoßfänger zugleich zur Erfassung von Kollisionen bei einer Bewegung des Reinigungsroboters in dem Reinigungsbereich dient.

In einer ersten Ausgestaltung ist vorgesehen, dass die Berührungssensorik durch mindestens oder genau einen Flächensensor gebildet ist, welcher zumindest abschnittsweise an einer Außenseite des Roboterarms, insbesondere der Segmente, angeordnet ist. Insbesondere ist der Flächensensor flächig, vorzugsweise vollflächig, an der Vorderseite des Roboterarms und/oder den Seiten des Roboterarms angeordnet. Vorzugsweise ist der Flächensensor durch einen resistiven und/oder kapazitiven Flächensensor gebildet. Anders formuliert, ist der Flächensensor berührungsempfindlich und/oder druckempfindlich und/oder annäherungsempfindlich ausgebildet. Bevorzugt ist der Flächensensor ausgebildet, das Sensorsignal bei einer Berührung mit dem Hindernis und/oder einer Annäherung an das Hindernis zu erzeugen. Beispielsweise kann der Flächensensor durch eine fühlende Haut bzw. Beschichtung realisiert werden, die auf resistive oder kapazitive Veränderungen reagiert. Es wird somit eine Berührungssensorik vorgeschlagen, welche eine großflächige, vorzugsweise vollflächige Erfassung von Berührungen des Roboterarms mit einem Hindernis ermöglicht.

In einer alternativen oder optional ergänzenden Ausgestaltung ist vorgesehen, dass die Berührungssensorik durch mindestens oder genau einem Berührungssensor gebildet ist, welcher in mindestens oder genau einem Segment und/oder mindestens oder genau einem Gelenk des Roboterarms angeordnet ist. Insbesondere ist in jedem Segment und/oder in jedem Gelenk, vorzugsweise inklusive des Basisgelenks und/oder des Kippgelenks, jeweils ein Berührungssensor angeordnet. Der mindestens eine Berührungssensor kann als ein Kraft- und/oder Momentensensor ausgebildet sein. Vorzugsweise ist der mindestens eine Berührungssensor als ein in dem Gelenk des Roboterarms angeordneter Momentensensor und/oder als ein in dem mindestens oder genau einem Segment angeordneter Kraftsensor ausgebildet. Bevorzugt ist der mindestens eine Berührungssensor ausgebildet, das Sensorsignal aufgrund einer Krafteinleitung bei einer Kollision mit dem Hindernis zu erzeugen. Es wird somit eine Berührungssensorik vorgeschlagen, welche sich durch eine besonders robuste Ausgestaltung auszeichnet.

In einer alternativen oder optional ergänzenden Ausgestaltung ist vorgesehen, dass die Berührungssensorik durch mindestens oder genau einen Gelenkantrieb des Roboterarms gebildet ist, wobei die Steuereinheit ausgebildet ist, einen Motorstrom des Gelenkantriebs zu überwachen. Insbesondere weist der Roboterarm je Gelenk einen Gelenkantrieb auf, welche allesamt durch die Steuereinheit überwacht werden und/oder überwachbar sind. Vorzugsweise weist die Steuereinheit ein Überwachungsmodul auf, welches eingerichtet ist, die Motorströme der Gelenkmotoren zu überwachen und bei einer Stromänderung das Sensorsignal zu generieren. Weiterhin kann die Steuereinheit ein Berechnungsmodul aufweisen, welches ausgebildet ist, basierend auf dem Sensorsignal und/oder der Stromänderung auf den Ort und/oder die Größe der Kollision zu ermitteln. Es wird somit eine Kollisionserfassung vorgeschlagen, welche ohne zusätzliche Sensoren auskommt, so dass Kosten eingespart werden können.

In einer konkreten Weiterbildung ist vorgesehen, dass alle Gelenke des Roboterarms in der Ruhestellung so angeordnet sind, dass bei einer Berührung mit einem Hindernis für jede Kraftrichtung, insbesondere in Gehäuselängsrichtung und in Gehäusequerrichtung, ein durch die Berührungssensorik erfassbares zugehöriges Moment um mindestens eines der Gelenke resultiert. Anders formuliert, ist für jede zu erfassende Kraftrichtung mindestens oder genau ein entsprechendes Gelenk vorhanden. Insbesondere bezieht sich die Formulierung "alle Gelenke" auf die Gelenke zwischen den Segmenten sowie das Basisgelenk. Bevorzugt definieren die Gelenke jeweils eine Schwenkachse, welche in der Ruhestellung gleichgerichtet zueinander und/oder achsparallel zur Gehäusehochachse und/oder zu der Drehachse ausgerichtet sind. Im Speziellen sind die Gelenke ausschließlich rotatorisch bewegbar, wobei für jedes Gelenk ein oder mehrere Segmente in der Ruhestellung einen Hebelarm um das entsprechende Gelenk bilden. Anders formuliert, resultiert bei einer direkten Krafteinleitung in ein Gelenk ein Moment in mindestens oder genau einem benachbarten Gelenk. Besonders bevorzugt liegt jedes Gelenk zumindest auf einer Segmentlinie mindestens eines Segments oder ist mit einem Hebelarm von deutlich weniger als 90 Grad, vorzugsweise weniger als 70 Grad, zu dem zugehörigen Segment angeordnet. Optional ist das Berechnungsmodul der Steuereinheit ausgebildet, auf Basis des eingeleiteten Moments die Größe und/oder den Ort der Kollision zu ermitteln. Vorzugsweise ist das Berechnungsmodul ausgebildet, eine Addition von Momenten an hintereinanderliegenden Gelenken zu berücksichtigen. Der Erfindung liegt hierbei die Erkenntnis zugrunde, dass je nach Kontaktpunkt einer Berührung bzw. Kollision an unterschiedlichen Gelenken Momente eingeleitet werden, wobei aufgrund der seriellen Kinematik des Roboterarms auf die Addition der Momente an hintereinanderliegenden Gelenken zu achten ist, da eine Kollision Einfluss auf mehrere Gelenke haben und sich eine Kollisionskraft auf diese aufteilen kann. Es wird somit eine Berührungssensorik vorgeschlagen, welche sich durch eine besonders sichere und genaue Erfassung von Hindernissen durch den Roboterarm auszeichnet.

In einer weiteren Realisierung ist vorgesehen, dass der Reinigungsroboter einen Umfeldsensor aufweist, welcher zur Erfassung von Umfelddaten in Bezug auf den Reinigungsbereich ausgebildet und/oder geeignet ist. Insbesondere dient der Umfeldsensor zur Erstellung einer Umgebungskarte des Reinigungsbereichs und/oder zur Navigation des Reinigungsroboters in dem Reinigungsbereich. Der Umfeldsensor ist vorzugsweise als ein optischer Sensor, beispielsweise ein Kamerasensor, ein Lidarsensor oder ein Lasersensor, ausgebildet. Bevorzugt ist der Umfeldsensor an einer Oberseits des Gehäuses angeordnet. Der Umfeldsensor bildet somit in der Ruhestellung des Roboterarms den höchsten Punkt des Reinigungsroboters in Bezug auf die Gehäusehochachse.

In der Arbeitsstellung ist der Roboterarm zumindest abschnittsweise in einem Erfassungsbereich des Umfeldsensors angeordnet, wobei der in dem Erfassungsbereich angeordnete Teil des Roboterarms einen geringeren Querschnitt als ein außerhalb des Erfassungsbereichs angeordneter Teil des Roboterarms aufweist. Insbesondere weist der in dem Erfassungsbereich angeordnete Teil des Roboterarms maximal den halben Durchmesser und/oder die halbe Breite und/oder Höhe auf, wie der außerhalb des Erfassungsbereichs angeordnete Teil des Roboterarms auf. Besonders bevorzugt ist der Roboterarm ausschließlich mit dem querschnittreduzierten Teil in dem Erfassungsbereich des Umfeldsensors angeordnet und/oder anordenbar. Beispielsweise kann der querschnittreduzierte Teil an dem Basissegment abschnittsweise ausgebildet sein oder durch das Basissegment gebildet sein. Es wird somit ein Roboterarm vorgeschlagen, welcher insbesondere in der Arbeitsstellung eine möglichst geringe Störkontur in dem Erfassungsbereich des Umfeldsensors bildet. Zudem wird in der Ruhestellung der Erfassungsbereich zu keiner Zeit eingeschränkt.

Optional kann der Umfeldsensor durch eine Schutzabdeckung geschützt sein, welche über ein oder mehrere Stützabschnitte an der Oberseite des Gehäuses abgestützt ist. Vorzugsweise ist der querschnittsreduzierte Teil des Roboterarms in der Arbeitsstellung fluchtend und/oder in Überdeckung mit dem mindestens einen Stützabschnitt in dem Erfassungsbereich angeordnet. Durch den Stützabschnitt ergibt sich im Erfassungsbereich des Umfeldsensors ein Totbereich, insbesondere ein "toter" Winkelbereiche, in welchem keine Umfelderfassung durch den Umfeldsensor durchgeführt werden kann. Durch die Überdeckung des Stützabschnitts mit dem querschnittsreduzierten Teil des Roboterarms in der Arbeitsstellung, kann ein zusätzlicher Totbereich in der oberen Arbeitsstellung des Roboterarms vermieden werden.

In einer konkreten Umsetzung ist vorgesehen, dass zumindest der in dem Erfassungsbereich anordenbare Teil des Roboterarms, insbesondere das Basisgelenk, in der Ruhestellung in dem Gehäuse versenkt ist. Alternativ oder optional ergänzend ist zumindest der außerhalb des Erfassungsbereichs anordenbare Teil des Roboterarms in der Ruhestellung außenseitig an dem Gehäuse angeordnet. Anders formuliert, trägt der querschnittsreduzierte Teil nicht zur Bildung des Stoßfängers bei. Der Roboterarm ist über das Kippgelenk zwischen der Ruhestellung und der Arbeitsstellung, vorzugsweise einer oberen Arbeitsstellung, bewegbar. Hierbei dient das Kippgelenk dazu den Roboterarm, vorzugsweise das Basissegment, von einer im Wesentlichen horizontalen Ausrichtung in der Ruhestellung in eine im Wesentlichen vertikale Ausrichtung in der oberen Arbeitsstellung zu überführen. Bevorzugt ist das Kippgelenk zwischen der Gehäuseoberseite und der Gehäuseunterseite, vorzugsweise in dem Gehäuse verstaut, angeordnet. Dadurch wird sichergestellt, dass der querschnittsreduzierte und somit empfindlichere Teil des Roboterarms in der Ruhestellung geschützt in dem Gehäuse aufgenommen ist.

In einer weiteren Konkretisierung ist vorgesehen, dass zumindest der außerhalb des Erfassungsbereichs anordenbare Teil des Roboterarms in der Ruhestellung die Gehäusefront größtenteils überdeckt. Insbesondere überdeckt der Roboterarm die Gehäusefront in der Ruhestellung in der Gehäusehochrichtung zu mehr als 50 %, vorzugsweise zu mehr als 70 %, im Speziellen zu mehr als 85 %. Anders formuliert, sind die Segmente des Roboterarms, die außenseitig an der Gehäusefront angeordnet sind, derart ausgestaltet, dass diese die Höhe des Gehäuses größtenteils oder vollständig überdecken. Es wird somit ein Roboterarm vorgeschlagen, welcher in der Ruhestellung eine große Berührungsfläche zur Bildung des Stoßfängers bereitstellt, um die notwendige Höhe des Reinigungsroboters abbilden zu können.

In einer weiteren Realisierung ist vorgesehen, dass der Roboterarm in der Ruhestellung konturnah unter Bildung eines Luftspaltes an der Gehäusefront, insbesondere dem Aufnahmebereich, angeordnet ist. Der Luftspalt dient insbesondere dazu, eine Bewegung des Roboterarms während der Kollision zu ermöglichen. Dabei ist "konturnah" dahingehend zu verstehen, dass der Roboterarm mit einem geringen und/oder konstanten Abstand der Außenkontur des Gehäuses folgt. Vorzugsweise ist der Luftspalt in axialer Richtung in Bezug auf die Gehäuselängsachse und/oder die Gehäusequerachse zwischen dem Roboterarm und dem Gehäuse, insbesondere der Vorderfläche bzw. den Seitenflächen, gebildet. Im Speziellen ist der Roboterarm über den Luftspalt zumindest in Gehäuselängsrichtung und/oder in Gehäusequerrichtung bestandet und/oder berührungsfrei zu dem Gehäuse angeordnet. Beispielsweise kann der Luftspalt eine Spaltbreite von weniger als 10 mm, vorzugsweise weniger als 5 mm, im Speziellen weniger als 3 mm aufweisen. Durch den Luftspalt wird eine Relativbewegung zwischen dem Roboterarm und dem Gehäuse gewährleistet, wodurch die Kollision in den Gelenken des Roboterarms durch die Berührungssensorik registriert werden kann. Der Luftspalt ermöglicht zudem, dass nur der Roboterarm der Kollision ausgesetzt wird, während das Gehäuse keine oder kaum eine Erschütterung erfährt.

Ein weiterer Gegenstand der Erfindung betrifft ein Verfahren zur Steuerung des Reinigungsroboters, wie dieser bereits zuvor beschrieben wurde. Das Verfahren eignet sich insbesondere, um mittels eines hierin beschriebenen Reinigungsroboters ausgeführt zu werden. Vorzugsweise ist die Steuereinheit des Reinigungsroboters dazu eingerichtet, das beschriebene Verfahren ganz oder teilweise auszuführen. Dazu kann die Steuereinheit einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Steuereinheit bzw. den Reinigungsroboter übertragen werden und umgekehrt.

Bei dem Verfahren wird der Roboterarm in eine Arbeitsstellung überführt, um ein Objekt zu bewegen und/oder eine Oberfläche zu reinigen, und in eine Ruhestellung überführt, um den Roboterarm an dem Gehäuse zu verstauen, wobei der Roboterarm in der Ruhestellung an der Gehäusefront angeordnet wird, um einen Stoßfänger zu bilden. Insbesondere kann der Roboterarm eine untere und/oder eine obere Arbeitsstellung einnehmen. Dabei wird der Roboterarm in der unteren Arbeitsstellung innerhalb der Gehäusehöhe bewegt und in der oberen Arbeitsstellung außerhalb der Gehäusehöhe bzw. oberhalb des Gehäuses bewegt.

Um den Roboterarm von der Ruhestellung in die obere Arbeitsstellung zu überführen, wird der Roboterarm zuerst von der Roboterfront wegbewegt. Hierzu kann der Roboterarm zuerst in die untere Arbeitsstellung überführt werden. Beispielsweise kann der Roboterarm zu Überführung in die untere Arbeitsstellung mit allen Segmenten in eine gerade bzw. geradlinige Stellung gleichgerichtet zur Kippachse und/oder zur Gehäuselängsachse gebracht werden. In der unteren Arbeitsstellung kann der Roboterarm beispielsweise zum Greifen und/oder Bewegen von in dem Fahrweg befindlichen Objekten genutzt werden. Der Vorteil der unteren Arbeitsstellung besteht darin ist, dass der Reinigungsroboter den Roboterarm ohne Beeinflussung der Robotergesamthöhe und somit auch unter Möbeln einsetzen kann, um beispielsweise Objekte unter einem Schrank oder Bett hervorzuholen oder bewegbare Hindernisse mit einer Art "Wischbewegung" zur Seite zu schieben.

Anschließend kann der Roboterarm aus der unteren Arbeitsstellung in die obere Arbeitsstellung überführt werden. Beispielsweise kann der Roboterarm zu Überführung in die obere Arbeitsstellung um die Kippachse verkippt werden. Sobald sich der Roboterarm in der oberen Arbeitsstellung befindet, kann der Roboterarm frei bewegt, insbesondere um die Drehachse, verdreht werden. Vereinfacht gesagt, wird durch die untere Arbeitsstellung eine Benutzung des Roboterarms innerhalb der Höhe des Gehäuses ermöglicht und in der oberen Arbeitsstellung eine Benutzung des Roboterarms in beliebig erreichbaren Höhen ermöglicht. Die Rückführung des Roboterarmes von der oberen Arbeits- in die Ruhestellung findet in umgekehrter Reihenfolge statt. Durch die zwischenzeitliche Überführung des Roboterarms in die untere Arbeitsstellung kann der Roboterarm in die obere Arbeitsstellung oder die Ruhestellung ohne Gefahr einer Kollision des Roboterarms mit dem Gehäuse bzw. mit der Bodenfläche durchgeführt werden.

In einer weiteren Realisierung ist vorgesehen, dass in der Ruhestellung eine Berührung mit einem Hindernis durch den Roboterarm erfasst wird und ein Sensorsignal ausgegeben wird, wobei basierend auf dem Sensorsignal ein Fahrplan des Reinigungsroboters, insbesondere zur Umfahrung des Hindernisses, beeinflusst wird. Insbesondere wird das Sensorsignal an die Steuereinheit, insbesondere an das Berechnungsmodul, übermittelt und durch das Berechnungsmodul bei der Fahrplanung berücksichtigt. Vorzugsweise kann auf Basis des Sensorsignals der Ort und/oder die Größe der Kollision an dem Roboterarm ermittelt werden.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen:
- Fig. 1: eine perspektivische Draufsicht eines Reinigungsroboters mit einem Roboterarm in einer Ruhestellung als ein Ausführungsbeispiel der Erfindung;
- Fig. 2: eine perspektivische Untersicht des Reinigungsroboters aus Fig. 1;
- Fig. 3: eine perspektivische Darstellung des Reinigungsroboters mit dem Roboterarm in einer oberen Arbeitsstellung;
- Fig. 4: eine detaillierte Draufsicht des Roboterarms des Reinigungsroboters aus Fig. 1;
- Fig. 5: eine Seitenansicht des Reinigungsroboters mit dem Roboterarm in einer oberen Arbeitsstellung;
- Fig. 6: eine perspektivische Detailansicht des Roboterarms des Reinigungsroboters aus Fig. 1;
- Fig. 7: eine perspektivische Darstellung des Reinigungsroboters mit dem Roboterarm in einer unteren Arbeitsstellung;
- Fig. 8: eine perspektivische Darstellung des Reinigungsroboters mit dem Roboterarm in einer oberen Arbeitsstellung.

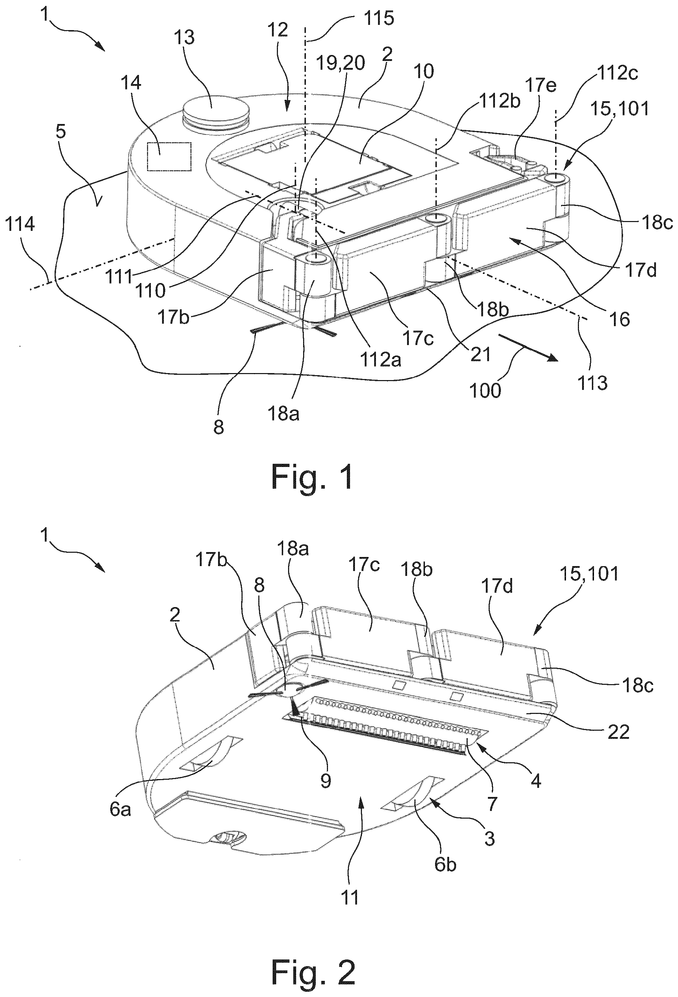

Die Figuren 1 und 2 zeigen jeweils einen Reinigungsroboter 1 in unterschiedlichen perspektivischen Ansichten. Der Reinigungsroboter 1 ist als ein autonom fortbewegender Saugroboter ausgeführt, welcher zur Durchführung von Saug- und Kehrarbeiten in einem Reinigungsbereich eingerichtet ist. Der Reinigungsroboter 1 kann beispielsweise zwischen etwa 7 cm und 15 cm hoch sein.

Der Reinigungsroboter 1 weist ein Gehäuse 2 auf, in welchem eine nicht näher dargestellte Antriebseinheit 3 zum Antrieb des Reinigungsroboters 1 sowie eine nicht näher dargestellte Bodenreinigungseinheit 4 zur Reinigung einer Bodenfläche 5 des Reinigungsbereichs aufgenommen ist.

Wie in Figur 2 dargestellt, weist die Antriebseinheit 3 zwei als Antriebsräder ausgebildete Antriebsmittel 6a, 6b auf, welche über einen, nicht dargestellten, Antriebsmotor angetrieben werden können. Durch Einstellen unterschiedlicher Geschwindigkeiten der Antriebsmittel 6a, 6b kann der Reinigungsroboter 1 auch Drehungen und Kurvenfahrten ausführen.

Wie in den Figuren 1 und 2 dargestellt, weist die Bodenreinigungseinheit 4 im Wesentlichen eine Bürstenwalze 7, eine Seitenbürste 8, einen Saugmund 9, einen Sammelbehälter 10 sowie ein, nicht dargestelltes, Sauggebläse auf. Die Bürstenwalze 7, die Seitenbürste 8 und der Saugmund 9 sind hierbei an einer Unterseite 11, wie in Figur 2 gezeigt, des Gehäuses 2 angeordnet, wobei die Borsten der Bürstenwalze 7 sowie der Seitenbürste 8 an die zu reinigende Bodenfläche 5 angreifen, um Staub und Schmutz zu entfernen und in Richtung des Saugmundes 9 zu transportieren. Der Saugmund 9 ist strömungstechnisch mit dem Sauggebläse verbunden, welches Staub und Schmutz über den Saugmund 9 einsaugt und in den Sammelbehälter 10 befördert. Der Sammelbehälter 10 ist hierbei an einer Oberseite 12, wie in Figur 1 gezeigt, des Gehäuses 2 entfernbar angeordnet. Beispielsweise können die Antriebseinheit 3 und die Bodenreinigungseinheit 4 über eine nicht dargestellte Energiespeichereinheit, wie z. B. ein wiederaufladbarer Akkumulator, mit elektrischer Energie versorgt werden.

Der Reinigungsroboter 1 weist weiterhin einen Umfeldsensor 13 auf, welcher zur Erfassung von Umfelddaten eingerichtet ist. Der Umfeldsensor 13 ist ausgebildet, eine Umgebung des Reinigungsroboters 1 zur Erfassung abzutasten und als Umfelddaten einer innerhalb des Gehäuses 2 angeordneten, schematisch angedeuteten Steuereinheit 14 bereitzustellen. Beispielsweise können die Umfelddaten zur Erstellung einer Umgebungskarte und/oder zur Navigation genutzt werden. Beispielsweise bestimmt die Steuereinheit 14 auf Basis der Umfelddaten einen Bewegungspfad des Reinigungsroboters 1 über die Bodenfläche 5 und navigiert den Reinigungsroboter 1 entsprechend der geplanten Bewegung. Der Reinigungsroboter 1 fährt hierbei in einer Fahrtrichtung 100 über die Bodenfläche 5 und reinigt diese. Beispielsweise ist der Umfeldsensor 13 als ein Lidarsensor ausgebildet.

Der Reinigungsroboter 1 weist zudem einen mehrgelenkigen Roboterarm 15, welcher in einer Ruhestellung 101, wie in den Figuren 1 und 2 dargestellt, an einer Gehäusefront 16 des Gehäuses 2 angeordnet ist. Der Roboterarm 15 kann durch die Steuereinheit 14 gesteuert und durch den Energiespeicher mit elektrischer Energie versorgt werden. Der Reinigungsroboter 1 kann den Roboterarm 15 nutzen, um auf erhöhten Flächen zu reinigen, Werkzeuge zu greifen und einzusetzen oder Gegenstände aufzuheben und/oder zu bewegen.

Der Roboterarm 15 weist mehrere Segmente 17a, 17b, 17c, 17d, 17e auf, welche über jeweils ein Gelenk 18a, 18b, 18c, 19, 20 zu einer seriellen Kinematik gelenkig miteinander verbunden sind. Ein erstes Segment 17a ist als ein Basissegment ausgebildet, welches über ein Basisgelenk 19 relativ zu dem Gehäuse 2 um eine Drehachse 110 verdrehbar. Ein zweites, drittes und viertes Segment 17b, 17c, 17d sind jeweils als ein Zwischensegment ausgebildet, wobei das zweite Segment 17b über ein Kippgelenk 20 um eine Kippachse 111 verkippbar mit dem ersten Segment 17a verbunden ist, das zweite Segment 17b über ein erstes Gelenk 18a um eine erste Schwenkachse 112a schwenkbar mit dem dritten Segment 17c verbunden ist und das dritte Segment 17d über ein zweites Gelenk 18b um eine zweite Schwenkachse 112b schwenkbar mit dem vierten Segment 17d verbunden ist. Ein fünftes Segment 17e ist hingegen als ein Endeffektor ausgebildet, welcher zum Greifen von Objekten und/oder Werkzeugen dient. Das fünfte Segment 17e ist wiederum über ein drittes Gelenk 18c um eine dritte Schwenkachse 112c schwenkbar mit dem vierten Segment 17d verbunden. Das erste, zweite und dritte Gelenk 18a, 18b, 18c sind jeweils als ein Schwenkgelenk ausgebildet. Die Gelenke 18a, 18b, 18c, das Basisgelenk 19 und das Kippgelenk 20 sind jeweils mit einem elektrischen Gelenkantrieb ausgestattet.

Das Gehäuse 2 weist an der Gehäusefront 16 einen Aufnahmebereich 21 auf, in welchem der Roboterarm 15 in der Ruhestellung 101 verstaut ist. Der Roboterarm 15 bildet hierbei in der Ruhestellung 101 einen Stoßfänger, um eine Kollision mit einem Hindernis abzufangen und/oder zu detektieren. Hierzu ist der Roboterarm 15 in der Ruhestellung 101 axial in Bezug auf eine Gehäuselängsachse 113, eine Gehäusequerachse 114 sowie eine Gehäusehochachse 115 mit einem geringen Überstand von beispielsweise 1 mm bis 2 mm in dem Aufnahmebereich 21 angeordnet. Der Roboterarm 15 überragt somit leicht das Gehäuse 2 nach vorn, zu den beiden Seiten und nach oben, wodurch der Roboterarm 15 zuerst in Kontakt mit einem Hindernis tritt, noch bevor das Gehäuse 2 selbst mit dem Hindernis kollidieren würde. Die Gehäuselängsachse 113 und die Gehäusequerachse 114 sind dabei als zwei rechtwinklig zueinander angeordnete Achsen des Gehäuses 2 zu verstehen, welche gleichgerichtet und/oder parallel zur Bodenfläche 5 orientiert sind, wobei die Fahrtrichtung 100 axial bezüglich der Gehäuselängsachse 113 orientiert ist. Die Gehäusehochachse 115 ist dabei senkrecht zu der Gehäuselängsachse 113 und der Gehäusequerachse 114 und/oder zu der Bodenfläche 5 ausgerichtet.

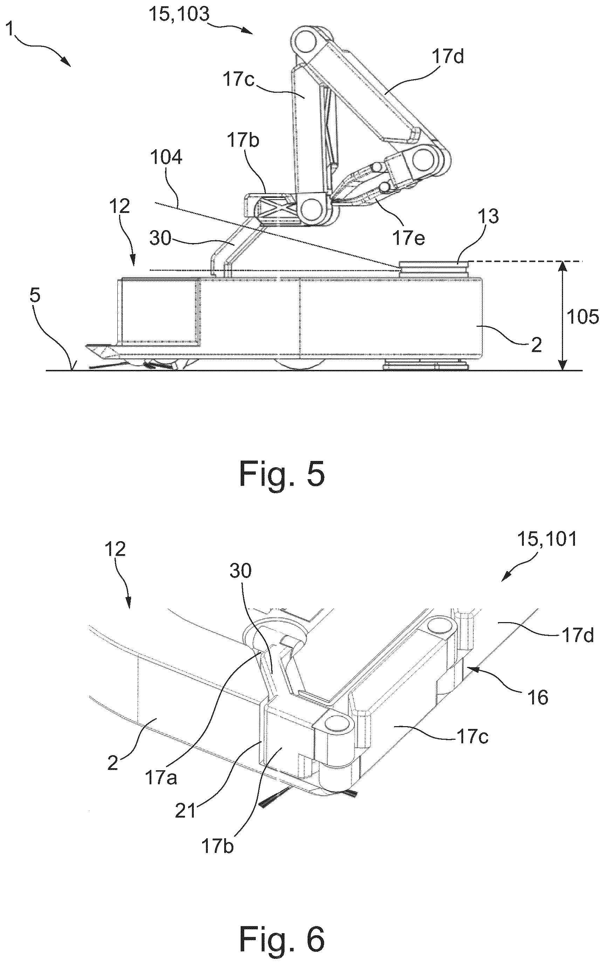

Des Weiteren ist der Roboterarm 15 in der Ruhestellung 101 in Bezug auf die Gehäusehochachse 115 innerhalb einer Maximalhöhe 105, wie in Figur 5 zu sehen, des Reinigungsroboters 1 angeordnet. Der Roboterarm 15 ist somit in der Ruhestellung 101 überstandsfrei zu der höchsten Stelle, hier der Umfeldsensor 13, des Reinigungsroboters 1 angeordnet, wodurch der Roboterarm 15 keine Störkontur beim Unterfahren von Gegenständen, wie z. B. Möbel, bildet.

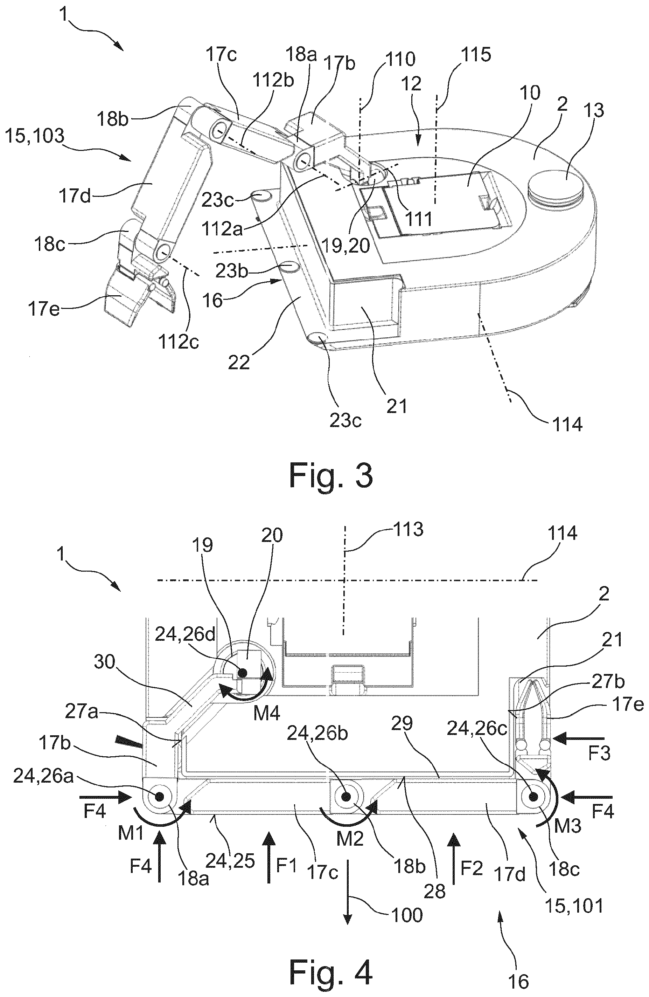

Wie in Figur 3 dargestellt, weist der Aufnahmebereich 21 einen Anlageabschnitt 22 auf, welcher zur horizontalen Anlage des Roboterarms 15 in der Ruhestellung 101 dient. Der Anlageabschnitt 22 erstreckt sich hierzu in axialer Richtung bezüglich der Gehäuselängsachse 113 und der Gehäusequerachse 114, wie auch in Figur 2 dargestellt, umlaufend an der Gehäusefront 16. In der Ruhestellung 101 liegt der Roboterarm 15 somit zumindest abschnittsweise in axialer Richtung bezüglich der Gehäusehochachse 115 an dem Anlageabschnitt 22 auf, um die Gelenke 18a, 18b, 18c, 20 des Roboterarms 15 und die darin befindlichen Gelenkantriebe, nicht dargestellt, zu entlasten.

Der Anlageabschnitt 22 weist je Gelenk 18a, 18b, 18c jeweils eine Gleitfläche 23a, 23b, 23c auf, über welche der Roboterarm 15 in der Ruhestellung 101 mit dem jeweiligen Gelenk 18a, 18b, 18c gleitend abgestützt ist. Beispielsweise sind die Gleitflächen 23a, 23b, 23c jeweils durch ein Teflon-Plättchen gebildet, welches an dem Anlageabschnitt 22 angeordnet ist. Durch die gleitende Anlage wird eine Relativbewegung bei einer Kollision des Roboterarms 15 mit einem Hindernis bereits bei geringer Krafteinwirkung aufgrund der reduzierten Reibkraft sichergestellt, wodurch eine Kollision besonders zuverlässig durch den Roboterarm 15 erfasst werden kann.

Hierzu weist der Roboterarm 15 eine Berührungssensorik 24 auf, welche, wie in Figur 4 beschrieben, zur Kollisionserfassung des Roboterarms 15 in der Ruhestellung 101 mit einem Hindernis dient. Die Berührungssensorik 24 kann prinzipiell durch eine Flächensensor 25 gebildet sein, welcher zumindest an der vorderen Außenseite der Segmente 17a, 17b, 17c, 17d, 17e flächig angeordnet ist und auf resistive oder kapazitive Änderungen reagiert. Alternativ oder optional ergänzend könnten jedoch auch die Motorströme der Gelenkantriebe durch die Steuereinheit 14 überwacht werden.

Alternativ oder optional ergänzend weist die Berührungssensorik 24 mehrere als Momentsensoren ausgebildete Berührungssensoren 26a, 26b, 26c, 26d auf, welche in den Gelenken 18a, 18b, 18c und dem Basisgelenk 19 angeordnet sind, um bei einer Krafteinleitung einer Kraft F1, F2, F3, F4 ein Moment M1, M2, M3, M4 um die jeweilige Schwenkachse 112a, 112b, 112c bzw. die Drehachse 110 zu erfassen. Alternativ oder optional ergänzend können als Kraftsensoren ausgebildete Berührungssensoren, nicht dargestellt, in den Segmenten 17a, 17b, 17c, 17d, 17e eingesetzt werden, um die eingeleiteten Kräfte F1, F2, F3, F4 direkt zu erfassen.

Die Berührungssensorik 24 ist ausgebildet, basierend auf den resistiven oder kapazitiven Änderungen und/oder einer Stromänderung der Motorströme und/oder den Momenten M1, M2, M3, M4 und/oder den Kräften F1, F2, F3, F4 ein Sensorsignal bereitzustellen, welches durch die Steuereinheit 14 ausgewertet und bei der Fahrplanung berücksichtigt wird.

Je nach Kontaktpunkt einer Berührung bzw. Kollision werden, wie in Figur 4 exemplarisch anhand der dargestellten Kräfte F1, F2, F3, F4 erläutert, an den unterschiedlichen Gelenken 18a, 18b, 18c, 19 entsprechende Momente M1, M2, M3, M4 eingeleitet, die auf die Größe und den Ort der Kollision hinweisen. Dies wird dadurch realisiert, indem die Drehachse 110 sowie die Schwenkachsen 112a, 112b, 112c in der Ruhestellung 101 gleichgerichtet zueinander bzw. zu der Gehäusehochachse 115 ausgerichtet sind. Beispielsweise resultiert eine Krafteinleitung am dritten Segment 17c durch die Kraft F1 in einem Moment M1 um die erste Schwenkachse 112a, welches durch einen ersten Berührungssensor 26a in dem ersten Gelenk 18a erfasst wird. Beispielsweise resultiert eine Krafteinleitung am vierten Segment 17d durch die Kraft F2 in einem Moment M2 um die zweite Schwenkachse 112b, welches durch einen zweiten Berührungssensor 26b in dem zweiten Gelenk 18b erfasst wird. Beispielsweise resultiert eine Krafteinleitung am fünften Segment 17e durch die Kraft F3 in einem Moment M3 um die dritte Schwenkachse 112c, welches durch einen dritten Berührungssensor 26c in dem dritten Gelenk 18c erfasst wird. Beispielsweise resultiert eine Krafteinleitung am zweiten Segment 17b und/oder am ersten Gelenk 18a und/oder am dritten Gelenk 18c durch eine der Kräfte F4 jeweils in einem Moment M4 um die Drehachse 110, welches durch einen vierten Berührungssensor 26d in dem Basisgelenk 19 erfasst wird.

Somit sind das Basisgelenk 19 und die Gelenke 18a, 18b, 18c so angeordnet, dass Kollisionen aus jeglichen Richtungen bezüglich der Gehäuselängsachse 113 und der Gehäusequerachse 114 registriert werden können, da für jede zu erfassende Kraftrichtung mindestens ein entsprechendes Gelenk vorhanden ist. Dabei ist zu beachten, dass sich eine Kraft auch auf mehrere Gelenke 18a, 18b, 18c, 19 aufteilen kann. Beispielsweise teilt sich die Kraft F2 auf das Basisgelenk 19 sowie das erste und zweite Gelenk 18a, 18b auf.

Die Gehäusefront 16 weist in der Draufsicht eine rechteckige Außenkontur auf, wobei in der Ruhestellung das zweite Segment 17b an einer ersten Seitenfläche 27a des Gehäuses 2, das dritte und das vierte Segment 17c, 17d an einer Vorderfläche 28 des Gehäuses 2 und das fünfte Segment 17e an einer zweiten Seitenfläche 27b des Gehäuses 2 über einen Luftspalt 29 gegenüber dem Gehäuse 2 beabstandet angeordnet sind, um eine Relativbewegung des Roboterarms 15 zum Gehäuse 2 sowohl in Fahrtrichtung 100 als auch an den Seiten zu ermöglichen, sodass eine Kollision des Roboterarms 15 mit einem Hindernis erfasst werden kann. Die erste und die zweite Seitenfläche 27a, 27b erstrecken sich dabei in jeweils einer Radialebene der Gehäusequerachse 114 und die Vorderfläche 28 in einer Radialebene der Gehäuselängsachse 113. Der Luftspalt 29 ermöglicht zudem, dass nur der "weiche" Roboterarm 15 der Kollision ausgesetzt wird, während das Gehäuse 2, insbesondere die Gehäusefront 16, keine oder kaum eine Erschütterung erfährt.

Wie der Figur 4 zu entnehmen, ist das zweite Segment 17b mit einem Hebelarm 30, welcher mit einem Winkel von weniger als 90 Grad, z. B. ca. 45 Grad, von der Segmentlinie abweicht, an das Kippgelenk 20 angebunden. Des Weiteren liegen die Gelenke 18a, 18b, 18c in der Ruhestellung in der Segmentlinie mindestens eines zugehörigen Segments. Dadurch ergibt sich eine besonders vorteilhafte Anordnung der Gelenke 18a, 18b, 18c, 18d, 19 zu den Segmenten 17b, 17c, 17d, 17e, sodass die Berührungssensoren 26a, b, c an allen Stellen der Segmente 17b, 17c, 17d, 17e Kollisionen registrieren können.

In Figur 5 ist der Roboterarm 15 in einer Arbeitsstellung, nachfolgend als obere Arbeitsstellung 103 bezeichnet, angeordnet. In der oberen Arbeitsstellung 103 überragt der Roboterarm 15 die Oberseite 12 des Gehäuses 2 bzw. die durch den Umfeldsensor 13 definierte Maximalhöhe 105, um beliebige erreichbare Höhen bedienen zu können. Hierbei weist ein innerhalb eines Erfassungsbereichs 104 des Umfeldsensors 13 angeordneter Teil des Roboterarms 15, vorzugsweise der Hebelarm 30, einen kleineren Querschnitt als ein außerhalb des Erfassungsbereichs angeordneter Teil des Roboterarms 15 auf. Beispielsweise weist der Hebelarm 30 des zweiten Segments 17b eine geringere Breite als der restliche Teil des zweiten Segments 17b auf. Der Hebelarm 30 ist dabei so dünn wie möglich gestaltet, um den Erfassungsbereich 104 des Umfeldsensors 13 möglichst wenig zu behindern, d. h. möglichst wenige der Messstrahlen abzufangen und somit einen Totbereich für den Umfeldsensor, z. B. den Lidarsensor, hinsichtlich einer Umgebungserfassung zu erzeugen.

In der Ruhestellung 101 ist der Hebelarm 30 hingegen, wie in Figur 6 dargestellt, in dem Gehäuse 2 versenkt aufgenommen, wohingegen der außerhalb des Erfassungsbereichs 104 anordenbare Teil des Roboterarms 15 in der Ruhestellung 101 außenseitig an der Gehäusefront 16 an dem Gehäuse 2 angeordnet ist. Dabei ist der außerhalb des Erfassungsbereichs 104 anordenbare Teil des Roboterarms 15, also insbesondere der außerhalb des Erfassungsbereichs 104 anordenbare Teil des zweiten Segments 17b sowie die restlichen Segmente 17c, 17d, 17e bewusst breit gestaltet, um die Höhe des Gehäuses 2 größtenteils zu überdecken und somit eine breite Berührungsfläche für den Stoßfänger zu bilden. Die Segmente 17a, 17b, 17c, 17d, 17e können dabei hohl gestaltet sein bzw. eine mit Deckflächen versehene Stützstruktur aufweisen, um die Masse der Segmente 17a, 17b, 17c, 17d, 17e bzw. des Roboterarms 15 zu reduzieren.

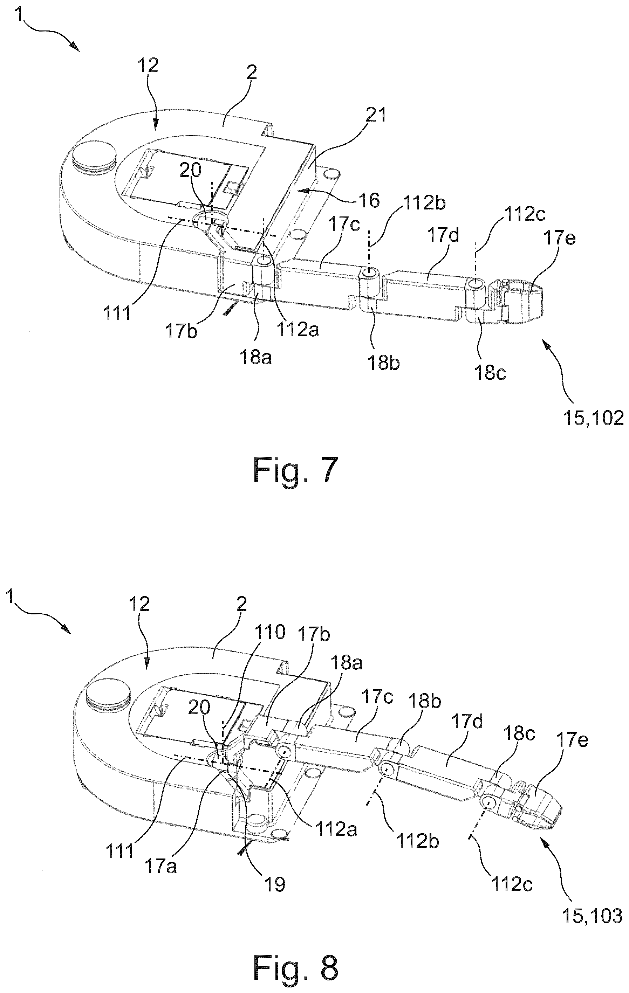

Anhand der Figuren 7 und 8 wird nachfolgend ein Verfahren zur Steuerung des Roboterarms 15 beschrieben. Um den gefalteten Roboterarm 15 von der Ruhestellung 101, wie z. B. in Figur 1 dargestellt, in die obere Arbeitsstellung 103, wie z. B. in Figur 3 dargestellt, zu überführen, wird der Roboterarm 15 zunächst in eine untere Arbeitsstellung 102, wie in Figur 7 dargestellt, überführt. Hierzu werden das dritte, vierte und fünfte Segment 17c, 17d, 17e zunächst aus dem Aufnahmebereich 21 über die Gelenkantriebe der Gelenke 18a, 18b, 18c von der Gehäusefront 16 wegbewegt. Bevorzugt werden die Segmente 17c, 17d, 17e hierzu in eine im Wesentlichen geradlinige Stellung und/oder im Wesentlichen gleichgerichtet zur Kippachse 111 des Kippgelenks 20 ausgerichtet. Alternativ werden die Segmente 17c, 17d, 17e so ausgerichtet, dass sie bei der Kippbewegung nicht mit der Bodenfläche 5 oder dem Gehäuse 2 zusammenstoßen.

Von der unteren Arbeitsstellung 102 kann der Roboterarm 15 mittels Kippbewegung ohne Gefahr einer Kollision des Roboterarms 15 mit dem Gehäuse 2 bzw. mit dem Boden in die obere Arbeitsstellung 103, wie in Figur 7 dargestellt, überführt werden. Hierzu wird das zweite Segment 17b zunächst aus dem Aufnahmebereich 21 über den Gelenkantrieb des Kippgelenks 20 zur Gehäuseoberseite 12 verkippt. Sobald der Roboterarmarm 15 in der oberen Arbeitsstellung 103 ist, können alle Gelenke 18a, 18b, 18c, 19, 20 uneingeschränkt genutzt werden. Die Rückführung des Roboterarmarms 15 von der oberen Arbeitsstellung 103 in die Ruhestellung 101 findet in umgekehrter Reihenfolge statt. Je nach Gelenkstellung können die Segmente 17c, 17d, 17e zumindest abschnittsweise in dem Erfassungsbereich 104 des Umfeldsensors 13 angeordnet sein, wobei die Steuerungseinheit 14 ausgebildet ist, dies bei der Verarbeitung der Umfelddaten zu berücksichtigen.

Optional kann der Roboterarm 15, insbesondere die Gelenke 18a, 18b, 18c, jedoch auch in der unteren Arbeitsstellung 102 genutzt werden. Vorteil der unteren Arbeitsstellung 102 ist, dass der Reinigungsroboter 1 den Roboterarm 15 ohne Änderung der Robotergesamthöhe und somit auch unter Möbeln einsetzen kann, um beispielsweise Gegenstände unter einem Schrank oder Bett hervorzuholen oder Gegenstände mit einer Art "Wischbewegung" zur Seite zu schieben.

### Bezugszeichenliste

- 1: Reinigungsroboter
- 2: Gehäuse
- 3: Antriebseinheit
- 4: Bodenreinigungseinheit
- 5: Bodenfläche
- 6a, b: Antriebsmittel
- 7: Bürstenwalze
- 8: Seitenbürste
- 9: Saugmund
- 10: Sammelbehälter
- 11: Unterseite
- 12: Oberseite
- 13: Umfeldsensor
- 14: Steuereinheit
- 15: Roboterarm
- 16: Gehäusefront
- 17a - e: Segmente
- 18a - c: Gelenke
- 19: Basisgelenk
- 20: Kippgelenk
- 21: Aufnahmebereich
- 22: Anlageabschnitt
- 23a - c: Gleitfläche
- 24: Berührungssensorik
- 25: Flächensensor
- 26a - d: Berührungssensor
- 27a, b: Seitenfläche
- 28: Vorderfläche
- 29: Luftspalt
- 30: Hebelarm

- 100: Fahrtrichtung
- 101: Ruhestellung
- 102: untere Arbeitsstellung
- 103: obere Arbeitsstellung
- 104: Erfassungsbereich
- 105: Maximalhöhe

- 110: Drehachse
- 111: Kippachse
- 112a - c: Schwenkachse
- 113: Gehäuselängsachse
- 114: Gehäusequerachse
- 115: Gehäusehochachse

## Patentansprüche

1. Reinigungsroboter (1) zur Reinigung eines Reinigungsbereichs,
- mit einem Gehäuse (2),
- mit einer Antriebseinheit (3) zum Antrieb des Reinigungsroboters (1) in dem Reinigungsbereich,
- mit einer Bodenreinigungseinheit (4) zur Reinigung einer Bodenfläche (5) des Reinigungsbereichs,
- mit einem Roboterarm (15) zum Bewegen von Objekten und/oder zur Reinigung einer gegenüber der Bodenfläche (5) erhöhten Oberfläche, wobei der Roboterarm (15) in einer Ruhestellung (101) an einer Gehäusefront (16) des Gehäuses (2) angeordnet ist,
- mit einer Steuereinheit (14) zur Steuerung der Antriebseinheit (3), der Bodenreinigungseinheit (4) und des Roboterarms (15),
**dadurch gekennzeichnet, dass**
der Roboterarm (15) in der Ruhestellung (101) einen Stoßfänger bildet.

2. Reinigungsroboter (1) nach Anspruch 1, **dadurch gekennzeichnet, dass** das Gehäuse (2) an der Gehäusefront (16) einen Aufnahmebereich (21) für den Roboterarm (15) aufweist, wobei der Roboterarm (15) in der Ruhestellung (101) innerhalb einer Maximalhöhe (105) des Reinigungsroboters (1) in dem Aufnahmebereich (21) angeordnet ist und zumindest in Bezug auf eine Gehäusehochachse (115) und/oder eine Gehäuselängsachse (113) mit einem Überstand in dem Aufnahmebereich (21) angeordnet ist.

3. Reinigungsroboter (1) nach Anspruch 2, **dadurch gekennzeichnet, dass** der Aufnahmebereich (21) einen Anlageabschnitt (22) zur Anlage des Roboterarms (15) an dem Gehäuse (2) aufweist, wobei der Anlageabschnitt (22) mindestens eine Gleitfläche (23a, 23b, 23c) aufweist, über welche der Roboterarm (15) in der Ruhestellung (101) zumindest abschnittsweise gleitend an dem Anlageabschnitt (22) abgestützt ist.

4. Reinigungsroboter (1) nach einem der vorhergehenden Ansprüche, **dadurch gekennzeichnet, dass** der Roboterarm (15) mindestens zwei Segmente (17a, 17b, 17c, 17d, 17e) aufweist, welche über ein Gelenk (18a, 18b, 18c, 19, 20) zu einer seriellen Kinematik miteinander verbunden sind, wobei in der Ruhestellung (101) mindestens ein Segment (17a, 17b, 17c, 17d, 17e) an einer ersten Seitenfläche (27a) der Gehäusefront (16) und/oder an einer Vorderfläche (28) der Gehäusefront (16) und/oder an einer zweiten Seitenfläche (27b) der Gehäusefront (16) angeordnet ist.

5. Reinigungsroboter (1) nach einem der vorhergehenden Ansprüche, **dadurch gekennzeichnet, dass** der Roboterarm (15) eine Berührungssensorik (24) aufweist, welche ausgebildet ist, bei einer Berührung des Roboterarms (15) in der Ruhestellung (101) mit einem Hindernis ein Sensorsignal bereitzustellen, wobei die Steuereinheit (14) ausgebildet ist, auf Basis des Sensorsignals einen Fahrplan des Reinigungsroboters (1) zu beeinflussen.

6. Reinigungsroboter (1) nach Anspruch 5, **dadurch gekennzeichnet, dass** die Berührungssensorik (24) durch mindestens einen Flächensensor (25) gebildet ist, welcher zumindest abschnittsweise an einer Außenseite des Roboterarms (15) angeordnet ist.

7. Reinigungsroboter (1) nach Anspruch 5 oder 6, **dadurch gekennzeichnet, dass** die Berührungssensorik (24) durch mindestens einen Berührungssensor (26a, 26b, 26c, 26d) gebildet ist, welcher in mindestens einem Segment (17a, 17b, 17c, 17d, 17e) und/oder in mindestens einem Gelenk (18a, 18b, 18c, 19) des Roboterarms (15) angeordnet ist.

8. Reinigungsroboter (1) nach einem der Ansprüche 5 bis 7, **dadurch gekennzeichnet, dass** die Berührungssensorik (24) durch mindestens einen Gelenkantrieb des Roboterarms (15) gebildet ist, wobei die Steuereinheit (14) ausgebildet ist, einen Motorstrom des Gelenkantriebs zu überwachen.

9. Reinigungsroboter (1) nach einem der Ansprüche 5 bis 8, **dadurch gekennzeichnet, dass** alle Gelenke (18a, 18b, 18c, 19) des Roboterarms (15) in der Ruhestellung (101) so angeordnet sind, dass bei einer Berührung des Roboterarms (15) mit einem Hindernis für jede Kraftrichtung ein durch die Berührungssensorik (24) erfassbares zugehöriges Moment (M1, M2, M3, M4) um mindestens eines der Gelenke (18a, 18b, 18c, 19) resultiert.

10. Reinigungsroboter (1) nach einem der vorhergehenden Ansprüche, **gekennzeichnet durch** einen Umfeldsensor (13) zur Erfassung von Umfelddaten in Bezug auf den Reinigungsbereich, wobei der Roboterarm (15) in einer Arbeitsstellung (103) zumindest abschnittsweise in einem Erfassungsbereich (104) des Umfeldsensors (13) angeordnet ist, wobei der in dem Erfassungsbereich (104) angeordnete Teil des Roboterarms (15) einen geringeren Querschnitt als ein außerhalb des Erfassungsbereichs (104) angeordneter Teil des Roboterarms (15) aufweist.

11. Reinigungsroboter (1) nach Anspruch 10, **dadurch gekennzeichnet, dass** zumindest der in dem Erfassungsbereich (104) angeordnete Teil des Roboterarms (15) in der Ruhestellung (101) in dem Gehäuse (2) versenkt ist und/oder zumindest der außerhalb des Erfassungsbereichs (104) angeordnete Teil des Roboterarms (15) in der Ruhestellung (101) außenseitig an dem Gehäuse (2) angeordnet ist.

12. Reinigungsroboter (1) nach Anspruch 11, **dadurch gekennzeichnet, dass** der außerhalb des Erfassungsbereichs (104) angeordnete Teil des Roboterarms (15) in der Ruhestellung (101) die Gehäusefront (16) größtenteils überdeckt.

13. Reinigungsroboter (1) nach einem der vorhergehenden Ansprüche, **dadurch gekennzeichnet, dass** der Roboterarm (15) in der Ruhestellung (101) konturnah unter Bildung eines Luftspaltes (29) an der Gehäusefront (16) angeordnet ist.

14. Verfahren zur Steuerung eines Reinigungsroboters (1) nach einem der vorhergehenden Ansprüche, bei dem:
- der Roboterarm (15) in mindestens eine Arbeitsstellung (102, 103) überführt wird, um ein Objekt zu bewegen und/oder eine Oberfläche zu reinigen;
- der Roboterarm (15) in eine Ruhestellung (101) überführt wird, um den Roboterarm (15) zu verstauen, wobei der Roboterarm (15) in der Ruhestellung (101) an einer Gehäusefront (16) angeordnet wird, um einen Stoßfänger zu bilden.

15. Verfahren nach Anspruch 14, **dadurch gekennzeichnet, dass** in der Ruhestellung (101) eine Berührung mit einem Hindernis durch den Roboterarm (15) erfasst wird und ein Sensorsignal ausgegeben wird, wobei basierend auf dem Sensorsignal ein Fahrplan des Reinigungsroboters (1) beeinflusst wird.

## Claims

1. Cleaning robot (1) for cleaning an area to be cleaned,
- with a housing (2)
- with a drive unit (3) for driving the cleaning robot (1) in the area to be cleaned,
- with a floor cleaning unit (4) for cleaning a floor surface (5) of the area to be cleaned,
- with a robot arm (15) for moving objects and/or for cleaning a surface which is higher than the floor surface (5), wherein the robot arm (15), when in a rest position (101), is arranged on a housing front (16) of the housing (2),
- with a control unit (14) for controlling the drive unit (3), the floor cleaning unit (4) and the robot arm (15),
**characterised in that**
in the rest position (101), the robot arm (15) forms a bumper.

2. Cleaning robot (1) according to claim 1, **characterised in that** on the housing front (16), the housing (2) has a receiving region (21) for the robot arm (15), wherein, in the rest position (101), the robot arm (15) is arranged in the receiving region (21) within a maximum height (105) of the cleaning robot (1) and is arranged in the receiving region (21) with an overhang at least in respect of a vertical housing axis (115) and/or a longitudinal housing axis (113).

3. Cleaning robot (1) according to claim 2, **characterised in that** the receiving region (21) has an attachment section (22) for the attachment of the robot arm (15) to the housing (2), wherein the attachment section (22) has at least one sliding surface (23a, 23b, 23c), via which the robot arm (15) is supported in the rest position (101) on the attachment section (22) in a sliding manner at least in sections.

4. Cleaning robot (1) according to one of the preceding claims, **characterised in that** the robot arm (15) has at least two segments (17a, 17b, 17c, 17d, 17e), which are connected to one another via a joint (18a, 18b, 18c, 19, 20) to form a serial kinematic system, wherein, in the rest position (101), at least one segment (17a, 17b, 17c, 17d, 17e) is arranged on a first end face (27a) of the housing front (16) and/or on a front face (28) of the housing front (16) and/or on a second end face (27b) of the housing front (16).

5. Cleaning robot (1) according to one of the preceding claims, **characterised in that** the robot arm (15) has a touch sensor system (24) which is designed to provide a sensor signal when the robot arm (15), when in the rest position (101), makes contact with an obstacle, wherein the control unit (14) is designed to influence a route of the cleaning robot (1) based on the sensor signal.

6. Cleaning robot (1) according to claim 5, **characterised in that** the touch sensor system (24) is formed by at least one area sensor (25), which is arranged at least in sections on an outer side of the robot arm (15).

7. Cleaning robot (1) according to claim 5 or 6, **characterised in that** the touch sensor system (24) is formed by way of at least one touch sensor (26a, 26b, 26c, 26d), which is arranged in at least one segment (17a, 17b, 17c, 17d, 17e) and/or in at least one joint (18a, 18b, 18c, 19) of the robot arm (15).

8. Cleaning robot (1) according to one of claims 5 to 7, **characterised in that** the touch sensor system (24) is formed by way of at least one joint drive of the robot arm (15), wherein the control unit (14) is designed to monitor a motor current of the joint drive.

9. Cleaning robot (1) according to one of claims 5 to 8, **characterised in that**, in the rest position (101), all joints (18a, 18b, 18c, 19) of the robot arm (15) are arranged such that, when the robot arm (15) makes contact with an obstacle, an associated torque (M1, M2, M3, M4) which can be detected by the touch sensor system (24) results around at least one of the joints (18a, 18b, 18c, 19) for every direction of force.

10. Cleaning robot (1) according to one of the preceding claims, **characterised by** an environmental sensor (13) for detecting environmental data relating to the area to be cleaned, wherein, in an operational position (103), the robot arm (15) is arranged at least in sections in a detection region (104) of the environmental sensor (13), wherein the part of the robot arm (15) arranged in the detection region (104) has a smaller cross section than a part of the robot arm (15) arranged outside of the detection region (104).

11. Cleaning robot (1) according to claim 10, **characterised in that**, in the rest position (101), at least the part of the robot arm (15) arranged in the detection region (104) is recessed in the housing (2) and/or, in the rest position (101), at least the part of the robot arm (15) arranged outside the detection region (104) is arranged on the outside of the housing (2).

12. Cleaning robot (1) according to claim 11, **characterised in that**, in the rest position (101), the part of the robot arm (15) arranged outside the detection region (104) mostly covers the housing front (16).

13. Cleaning robot (1) according to one of the preceding claims, **characterised in that**, in the rest position (101), the robot arm (15) is arranged on the housing front (16) close to its contour, forming an air gap (29).

14. Method for controlling a cleaning robot (1) according to one of the preceding claims, in which:
- in at least one operational position (102, 103), the robot arm (15) is positioned to move an object and/or to clean a surface;
- in a rest position (101), the robot arm (15) is positioned to stow the robot arm (15), wherein, in the rest position (101), the robot arm (15) is arranged on a housing front (16) so as to form a bumper.

15. Method according to claim 14, **characterised in that**, in the rest position (101), an instance of contact with an obstacle by the robot arm (15) is detected and a sensor signal is output, wherein a route of the cleaning robot (1) is influenced based on the sensor signal.

## Revendications

1. Robot de nettoyage (1) destiné à nettoyer une zone de nettoyage, comprenant :
- un boîtier (2),
- une unité motrice (3) destinée à propulser le robot de nettoyage (1) dans la zone de nettoyage,
- une unité de nettoyage de sol (4) pour nettoyer une surface de sol (5) de la zone de nettoyage,
- un bras robotique (15) pour déplacer des objets et/ou pour nettoyer une surface plus haute que la surface de sol (5), dans lequel le bras robotique (15) est disposé sur une face avant de boîtier (16) du boîtier (2) dans une position de repos (101), et
- une unité de commande (14) destinée à commander l'unité motrice (3), l'unité de nettoyage du sol (4) et le bras robotique (15),
**caractérisé en ce que**
le bras robotique (15) forme un pare-chocs dans la position de repos (101).

2. Robot de nettoyage (1) selon la revendication 1, **caractérisé en ce que** le boîtier (2) comprend sur la face avant de boîtier (16) une zone de logement (21) pour le bras robotique (15), le bras robotique (15) étant disposé, dans la position de repos (101), dans la limite d'une hauteur maximale (105) du robot de nettoyage (1) dans la zone de logement (21) et étant disposé avec un dépassement dans la zone de logement (21) au moins par rapport à un axe vertical du boîtier (115) et/ou à un axe longitudinal du boîtier (113).

3. Robot de nettoyage (1) selon la revendication 2, **caractérisé en ce que** la zone de logement (21) comprend une section d'appui (22) pour l'appui du bras robotique (15) contre le boîtier (2), dans lequel la section d'appui (22) comprend au moins une surface de glissement (23a, 23b, 23c), sur laquelle le bras robotique (15) prend appui dans la position de repos (101) au moins par sections de façon coulissante contre la section d'appui (22).

4. Robot de nettoyage (1) selon l'une des revendications précédentes, **caractérisé en ce que** le bras robotique (15) comprend au moins deux segments (17a, 17b, 17c, 17d, 17e), qui sont reliés entre eux par une articulation (18a, 18b, 18c, 19, 20) de façon à former une chaîne cinématique sérielle, dans lequel, dans la position de repos (101), au moins un segment (17a, 17b, 17c, 17d, 17e) est disposé sur une première surface latérale (27a) de la face avant du boîtier (16) et/ou sur une surface frontale (28) de la face avant du boîtier (16) et/ou sur une deuxième surface latérale (27b) de la face avant du boîtier (16).

5. Robot de nettoyage (1) selon l'une des revendications précédentes, **caractérisé en ce que** le bras robotique (15) comprend un dispositif de détection de contact (24), qui est conçu pour délivrer un signal de capteur lors d'un contact du bras robotique (15) avec un obstacle dans la position de repos (101), dans lequel l'unité de commande (14) est configurée pour adapter un itinéraire du robot de nettoyage (1) sur la base du signal de capteur.

6. Robot de nettoyage (1) selon la revendication 5, **caractérisé en ce que** le dispositif de détection de contact (24) est formé par au moins un capteur de surface (25), qui est disposé au moins par sections sur un côté extérieur du bras robotique (15).

7. Robot de nettoyage (1) selon la revendication 5 ou 6, **caractérisé en ce que** le dispositif de détection de contact (24) est formé par au moins un capteur de contact (26a, 26b, 26c, 26d), lequel est disposé dans au moins un segment (17a, 17b, 17c, 17d, 17e) et/ou dans au moins une articulation (18a, 18b, 18c, 19) du bras robotique (15).

8. Robot de nettoyage (1) selon l'une des revendications 5 à 7, **caractérisé en ce que** le dispositif de détection de contact (24) est formé par au moins un actionneur d'articulation du bras robotique (15), dans lequel l'unité de commande (14) est configurée pour surveiller un courant moteur de l'actionneur d'articulation.

9. Robot de nettoyage (1) selon l'une des revendications 5 à 8, **caractérisé en ce que** toutes les articulations (18a, 18b, 18c, 19) du bras robotique (15) sont disposées dans la position de repos (101) de telle manière que, lors d'un contact du bras robotique (15) avec un obstacle, un moment (M1, M2, M3, M4) correspondant, détectable par le dispositif de détection de contact (24), est produit autour d'une des articulations (18a, 18b, 18c, 19) pour chaque direction de force.

10. Robot de nettoyage (1) selon l'une des revendications précédentes, **caractérisé par** un capteur d'environnement (13) destiné à détecter des données d'environnement se rapportant à la zone de nettoyage, dans lequel le bras robotique (15) est disposé, dans une position de travail (103), au moins par sections dans une zone de détection (104) du capteur d'environnement (13), dans lequel la partie du bras robotique (15) disposée dans la zone de détection (104) a une section transversale inférieure à une partie du bras robotique (15) disposée à l'extérieur de la zone de détection (104).

11. Robot de nettoyage (1) selon la revendication 10, **caractérisé en ce qu'**au moins la partie du bras robotique (15) disposée dans la zone de détection (104) est enfoncée dans le boîtier (2) en position de repos (101), et/ou au moins la partie du bras robotique (15) disposée à l'extérieur de la zone de détection (104) est disposée sur le côté extérieur du boîtier (2) en position de repos (101).

12. Robot de nettoyage (1) selon la revendication 11, **caractérisé en ce que** la partie du bras robotique (15) disposée à l'extérieur de la zone de détection (104) recouvre en majeure partie la face avant de boîtier (16) en position de repos (101).

13. Robot de nettoyage (1) selon l'une des revendications précédentes, **caractérisé en ce que** le bras robotique (15) est disposé en position de repos (101) au voisinage du contour de la face avant de boîtier (16) en formant un intervalle d'air (29).

14. Procédé de commande d'un robot de nettoyage (1) selon l'une des revendications précédentes, dans lequel :
- le bras robotique (15) est amené dans au moins une position de travail (102, 103), pour déplacer un objet et/ou nettoyer une surface,
- le bras robotique (15) est amené dans une position de repos (101), pour ranger le bras robotique (15), dans lequel le bras robotique (15) est disposé sur une face avant du boîtier (16) de façon à former un pare-chocs dans la position de repos (101).

15. Procédé selon la revendication 14, **caractérisé en ce que**, dans la position de repos (101), un contact avec un obstacle est détecté par le bras robotique (15) et un signal de capteur est délivré, dans lequel un itinéraire du robot de nettoyage (1) est adapté en fonction du signal de capteur.
